# EUROPEAN PATENT SPECIFICATION

(11) **EP 1 680 267 B1**
(45) Date of publication and mention of the grant of the patent: **22.07.2015**
(21) Application number: 04791856.0
(22) Date of filing: 31.10.2004
(51) Int. Cl.: B32B 3/30, B32B 5/26, B29C 59/04, B24D 11/00, B29C 43/22, D04H 1/46, D04H 1/54

(54) **METHOD FOR PRODUCING AN ABRASIVE NON-WOVEN CLOTH AND CLOTH THUS PRODUCED**
VERFAHREN ZUR HERSTELLUNG VON SCHLEIFVLIESSTOFF UND SCHLEIFVLIESSTOFF DAMIT HERGESTELLT
PROCEDE POUR PRODUIRE UN TISSU NON TISSE ABRASIF ET TISSU NON TISSE AINSI OBTENU

(30) Priority: 06.11.2003 IL 15878103; 16.04.2004 US 825287
(43) Date of publication of application: 19.07.2006
(73) Proprietor: N.R. Spuntech Industries Ltd., 14133 Upper Tiberias (IL)
(72) Inventor: BERENSTAIN, Yuval, 20692 Yokneam (IL); SHVARTZMAN, Michael, 15227 Givat Avni (IL); SEGAL, Nachmi, (IL)
(74) Representative: Becker Kurig Straus
(86) International application number: PCT/IL2004/000997
(87) International publication number: WO 2005/044177

(56) References cited:
- WO-A1-01/71081
- WO-A1-94/18367
- WO-A1-2004/011195
- WO-A1-2004/060613
- WO-A2-02/43536
- US-A- 4 104 095
- US-A- 4 319 944
- US-A- 4 477 938
- US-A- 5 786 065

## Description

### FIELD AND BACKGROUND OF THE INVENTION

The present invention relates to non-woven cloth products and, in particular, it concerns a method for producing abusive non-woven cloth, and the cloth resulting from this method.

Non-woven cloth (fabric) is used for an ever-growing range of products and applications. In particular, the constat trend towards use of disposable products has lead to huge growth in the market for non-woven materials, and has seen non-woven cloths being adapted as a cost-effective basis for many new products.

Types of non-woven cloth may be classified in many ways, for example, according to the type and gauge of fibers used, the laying technique for forming a web, or the linking technique for uniting the fibers into a cloth. Examples of classes of cloth production techniques to which the present invention is believed to be applicable include, but are not limited to, hotmelt, wet-laid and dry-laid water entanglement, thermo-bonding, air-through thermo-bonding and chemical bonding.

For certain applications, it is desirable to provide various degrees of abrasivity to non-woven cloth. This ranges from very mild abrasive properties used for facial cleansing or skin treatment through to righly abrasive scouring pads used for cleaning kitchen utensils. The required abrasive properties are generally achieved by use of thick gauge fibers which inherently exhibit the required abrasivity.

WO 94/18367 discloses dual purpose wiping and scrubbing articles which are formed by stitchbonding a thermoplastic layer onto an absorbent fibrous layer. The thermoplastic layer is contacted by a heated roller to effectuate melting of the thermoplastic material.

WO 02/43536 discloses a bi-functional nonwoven fabric wipe.

WO 01/71081 discloses a bulky sheet comprising a fiber aggregate formed by water needling of a fiber web.

WO 2004/0606 B discloses a multi-layer scrubbing product that includes at least an abrasive layer and an absorbent fibrous layer. The abrasive layer is formed directly on the fibrous layer, or may be first formed and then joined to the fibrous layer.>>

U.S. Patent No. 5,786,065 to Annis et al. describes a process for producing an abrasive non-woven material from an initially non-abrasive precursor by heating the cloth which includes between 10% and 50% by weight of thermoplastic fibers to near the melting point of the thermoplastic fibers so that they contract to form nodules. These nodules impart abrasive properties to one planar surface of the material. Differential properties between the two surfaces is achieved by ensuring a gradient in the proportion of the thermoplastic fibers through the initial cloth.

According to the teachings of Annis et al., the abrasivity is a function of the size of the nodules which is, itself, a function of the gauge of thermoplastic fibers used in the precursor material. From the examples quoted, Annis et al. implies that effective high abrasivity may be achieved by using fiber size in the range of 10-55 denier, corresponding to about 11-60 grams per 10,000 meters length of fiber (referred to as "decitex" or "d-tex"). This thickness of fiber necessarily imparts a noticeable coarseness and, after heat treatment, a degree of stiffness to the resulting cloth. In all cases, the surfaces of the material are clearly stated to be planar.

There is therefore a need for a production method and corresponding product which would provide a controllable degree of abrasivity of a non-woven cloth using low-gauge fibers and while maintaining a high degree of flexibility in the cloth.

### SUMMARY OF THE INVENTION

The present invention is a method for producing abrasive non-woven cloth, and the cloth resulting from this method.

According to the teachings of the present invention there is provided, a method according to claim 1 for producing abrasive non-woven cloth comprising: (a) forming a non-woven web of fibers including at least a first layer adjacent to a first surface of the web containing at least about 5% by weight of thermoplastic fibers; (b) patterning the web so as to generate a pattern of raised regions and lowered regions in the first surface; and (c) performing heat treatment on the web sufficient to cause at least part of the thermoplastic fibers to undergo changes in physical morphology, thereby imparting abrasive properties to at least the raised regions of the first surface.

According to a further feature, the non-woven web is implemented so as to include at least a second layer adjacent to a second surface of the web, the second layer containing primarily fibers which do not undergo changes in physical morphology under the heat treatment.

According to a further feature, the patterning is implemented so as to cause migration of at least a proportion of fibers within the first layer from the lowered regions to the raised regions.

According to a further feature, the patterning is implemented so as to cause migration of a majority of fibers making up the first layer in the lowered regions to the raised regions.

According to a further feature, the patterning is implemented by use of water jets to displace fibers.

According to a further feature, the water jets are directed towards a portion of the web passing over a cylinder with a perforated surface.

According to a further feature, the water jets are directed towards a portion of the web passing over a cylinder with a netting surface.

According to a further feature, the water jets are directed towards a portion of the web passing along a patterned conveyor belt.

According to a further feature, there is also provided a step of employing water jets to cause entanglement of fibers in the web.

According to a further feature, the patterning is implemented such that the raised regions include a plurality of isolated projecting features surrounded by the lowered regions.

According to a further feature, the patterning is implemented such that the raised regions include a plurality of elongated ridges.

According to a further feature, the thermoplastic fibers have a weight of no more than 4.5 grams per 10,000 meters., and preferably no more than 2.2 grams per 10,000 meters.

According to a further feature, the first layer contains at least about 10% by weight of the thermoplastic fibers.

According to certain implementations of the present invention, the first layer contains less than 50% by weight of the thermoplastic fibers. In alternative implementations, it is preferable that the first layer contain more than 50% by weight of the thermoplastic fibers.

There is also provided according to the teachings of the present invention, an abrasive non-woven cloth according to claim 13 comprising at least a first layer of fibers adjacent to a first surface of the cloth, the first layer containing at least 5% by weight of thermoplastic fibers heat treated so as to include a plurality of nodules, the first layer being patterned such that the first surface exhibits a pattern of raised regions and lowered regions.

According to a further feature, there is also provided at least a second layer of fibers adjacent to a second surface of the cloth, wherein the plurality of nodules are substantially only in the first layer.

According to a further feature, a majority of material from the first layer is located within the raised regions.

According to a further feature, the cloth is formed from a water entanglement process.

According to a further feature, the raised regions include a plurality of isolated projecting features surrounded by the lowered regions.

According to a further feature, the raised regions include a plurality of elongated ridges.

### BRIEF DESCRIPTION OF THE DRAWINGS

The invention is herein described, by way of example only, with reference to the accompanying drawings, wherein:
FIGS. 1A-1C are schematic cross-sectional views illustrating stages in production of a first implementation of an abrasive cloth according to the teachings of the present invention;
FIGS. 2A-2C are schematic cross-sectional views illustrating stages in production of a second implementation of an abrasive cloth according to the teachings of the present invention;
FIG. 3 is a schematic side view of a production line for implementing the method of the present invention;
FIG. 4A is an isometric view of a cylinder for use in the production line of Figure 3;
FIG. 4B is an enlarged view of a portion of the cylinder of Figure 4A as indicated;
FIG. 4C is a schematic partially-cut-away isometric view of a non-woven abrasive cloth produced by use of the cylinder of Figure 4A;
FIG. 5A is an isometric view of a cylinder for use in the production line of Figure 3;
FIG. 5B is an enlarged view of a portion of the cylinder of Figure 5A as indicated;
FIG. 5C is a schematic partially-cut-away isometric view of a non-woven abrasive cloth produced by use of the cylinder of Figure 5A;
FIG. 6A is an isometric view of a conveyor belt for use in the production line of Figure 3;
FIG. 6B is an enlarged view of a portion of the conveyor belt of Figure 6A as indicated; and
FIG. 6C is a schematic partially-cut-away isometric view of a non-woven abrasive cloth produced by use of the conveyor belt of Figure 6A.

### DESCRIPTION OF THE PREFERRED EMBODIMENTS

The present invention is a method for producing abrasive non-woven cloth, according to claim 4 and the cloth resulting from this method according to claim 13.

The principles and operation of production methods and corresponding products according to the present invention may be better understood with reference to the drawings and the accompanying description.

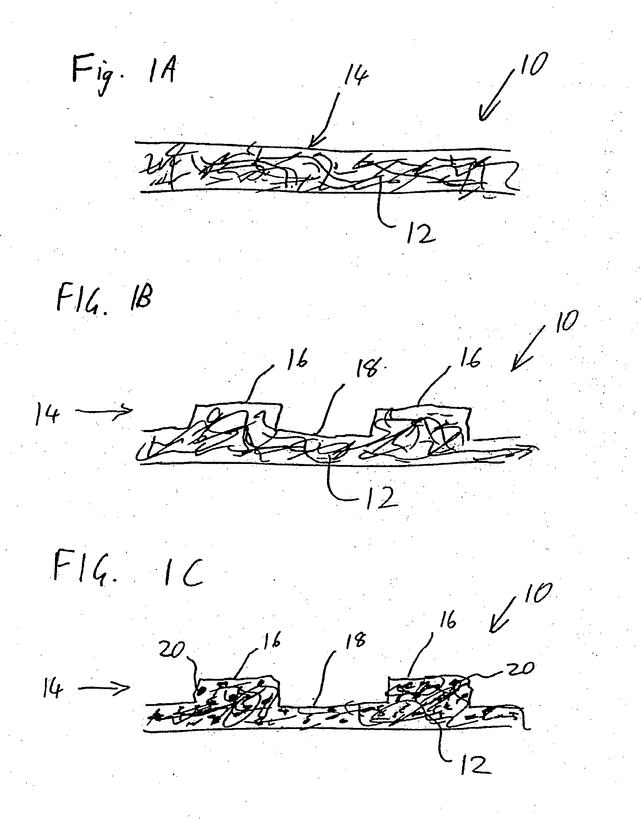

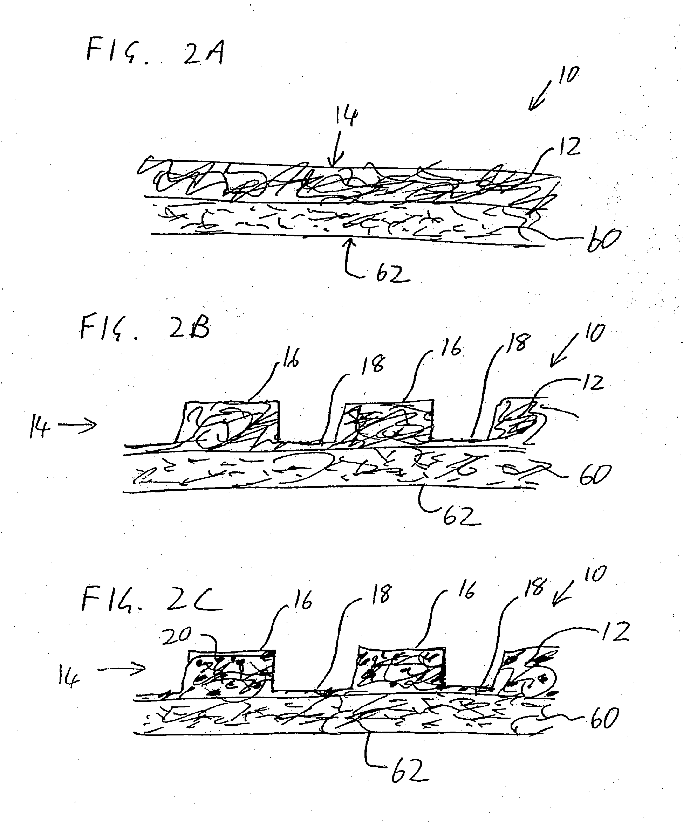

Referring now to the drawings, Figures 1A-1C and Figures 2A-2C illustrate various stages during two implementations of a method for producing abrasive non-woven cloth according to the teachings of the present invention in single-layer and multiple-layer implementations, respectively. Referring generically to both implementations in general terms, the method requires forming a non-woven web of fibers **10** (Figures 1A and 2A) including at least a first layer **12** adjacent to a first surface **14** of the web, where layer **12** contains between 5% and 100% by weight (preferably at least 10%) of thermoplastic fibers. Web **10** is then patterned so as to generate a pattern of raised regions **16** and lowered regions **18** in first surface **14** (Figures 1B and 2B). A heat treatment is then performed on web **10** so as to cause at least part of the thermoplastic fibers to undergo changes in physical morphology, for example forming nodules **20** (Figures 1C and 2C), thereby imparting abrasive properties to at least the raised regions **16** of first surface **14.**

It should be appreciated that the method of the present invention and the resulting product provide distinct advantages over the method and product proposed by the aforementioned Annis et al. reference. By using patterning to ensure a desired surface topography of the cloth, the level of abrasivity may be controlled independent of the particle size of the nodules. Specifically, in Annis et al. abrasivity results from nodules which are adjacent to the planar surface of the cloth and varies as a function of size of the nodules which, in turn, is a function largely of the initial fiber size. In contrast, the texture of the product of the present invention provides an extra degree of freedom to adjust the abrasivity of the product, similar to the ridges of a metal file which produce an effective abrasivity much greater than that of a smooth surface of similar material. As a result, fine thermoplastic fibers of d-tex no more than 4.5, and more preferably no more than 2.2, can be used, thereby avoiding the coarseness and stiffness which results from the use of larger gauge fibers. This and other advantages of the present invention will be better understood by reference to the following detailed description.

Before addressing the features of preferred implementations of the present invention in more detail, it will be useful to define certain terminology as used herein in the description and claims. Firstly, the term "thermoplastic" is used herein in the description and claims to refer to any polymer which flows on the application of heat. Preferably, the present invention is implemented with thermoplastics having a crystalline fraction when they are at a temperature below their characteristic melting point, i.e. where sections of the polymers' chains fold in an orderly pattern. Examples of crystalline polymers useful for implementing the present invention include, but are not limited to, polypropylene, polyethylene, polyester terephthalate, and polyamides. A most preferred example is polypropylene. In certain cases, amorphous polymers (i.e., that do not have a crystalline fraction) may also be used.

Reference may also be made to a "polymer transition temperature" of the thermoplastic material as a point of reference in defining the heat treatment performed according to the teachings of the present invention. In the case of a polymer with a crystalline fraction, the melting point is typically used as the point of reference. For amorphous polymers, the glass transition point may be used as the point of reference. In both cases, the reference point will be referred to generically as the "transition temperature" of the polymer.

The term "nodule" is used to refer to agglomerations of thermoplastic material caused by the heat treatment of the present invention such that the minimum dimension of the "nodule" is significantly greater than the diameter of the original fibers. It should be noted that the "nodules" do not need to be of any particular shape, and may in fact be complex interconnected masses formed from partial or total conglomeration of a plurality of fibers.

When referring to the gauge of fibers in fabric production, reference is made variously to scales of "d-tex" or "decitex" and to "denier". Decitex or d-tex is defined as the weight in grams of 10,000 meters of a fiber. Denier is defined as the weight in grams of 10.000 yards (9,000 meters) of a fiber, and is therefore related by a ratio of 9:10 to the d-tex value.

When referring to the composition of the various layers of fibers according to the present invention, reference is made to "percentage by weight" of the various fibers. It should be noted that the percentage by weight of thermoplastic fibers in layer 12 is calculated according to the initial fiber mix used for that individual layer. Although, after heat treatment, a proportion of the fibers have been converted into nodules or otherwise conglomerated such that they are no longer "fibers", the weight of the nodules is still taken into account when referring to the composition of the corresponding layer in the final product.

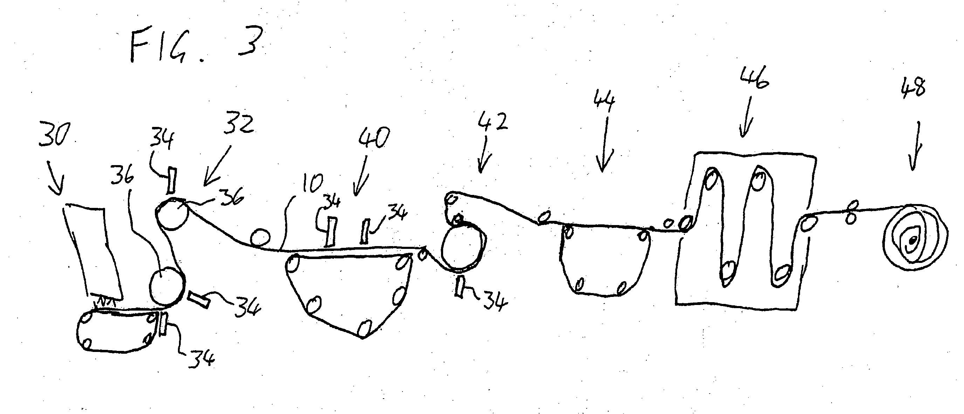

Turning now to the features of the present invention in more detail, it should be noted that the present invention is applicable to a wide range of types of non-woven fabric production techniques. By way of a non-limiting particularly preferred example, the invention will be illustrated in the context of a dry-laid water-entanglement production technique. Thus, Figure 3 shows schematically a production line for dry-laid water-entanglement production of non-woven cloth modified for implementing the method of the present invention.

Specifically, Figure 3 shows schematically a feed system **30** for supplying one or more layer of fibers to a water entanglement bonding system **32** with water jet nozzle arrangements **34** facing rotating cylindrical screens **36** under which lie one or more suction boxes (details not shown). These systems together produce a bonded cloth web corresponding to web **10** of Figures 1A or 2A. Both feed system **30** and water entanglement bonding system **32** include many details not shown here, including devices for fiber opening, blending, feeding and carding. All such details are well known in the art and will not be discussed further herein.

After bonding of the cloth, or as a component step thereof, the web is patterned according to the teachings of the present invention to form raised and lowered regions.

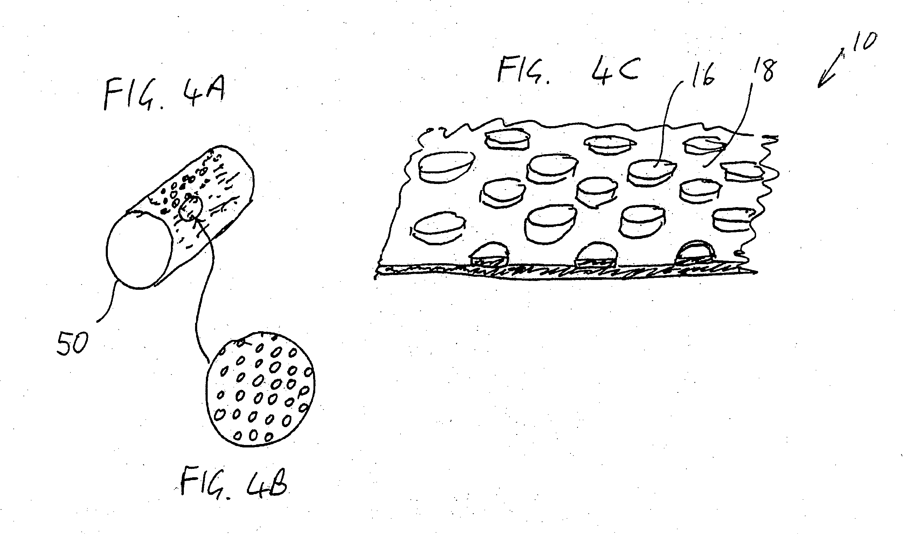

Figure 3 illustrates two subsystems for performing this patterning, namely, a conveyor subsystem **40** and a cylinder subsystem **42,** only one of which is typically actuated at any time. Each subsystem includes water jet nozzle arrangements and corresponding suction boxes, details of which are not shown here, as will be clear to one ordinarily skilled in the art. Various implementations of each of these subsystems will be described separately below with reference to Figures 4-6. After patterning, the web typically passes to a dewatering system **44** for removing a proportion of excess water from the web, followed by a drying system **46** which preferably performs both drying and heat treatment functions according to the teachings of the present invention. Finally, the web typically passes to a winding station **48** for winding and slitting to form rolls of a required size.

Referring now to particular preferred implementations of the patterning system, Figures 4A and 4B show a first implementation of a cylinder **50** for use in cylinder subsystem **42** where cylinder **50** is perforated with holes sufficient to allow entry of fiber portions, thereby forming a pattern of isolated projecting features 16 surrounded by lowered regions **18** as shown in Figure 4C. Size of the perforations, and thus of the resulting raised projections, is typically in the range of 1-3 mm diameter, and the pitch (i.e. center-to-center nearest neighbor spacing) is typically at least 1 mm greater than the diameter, and typically not more than 6 mm. As a result, for a hexagonally close packed layout (i.e. where all nearest neighbor spacings are equal) the open area of the perforations, and the corresponding resulting projections, generally account for from a few percent up to 60 percent of the total surface area, with a particularly preferred range of 20 to 50 percent. In general, relatively large open area is advantageous for increased rates of production, but the diameter of each individual perforation must be limited to avoid damage to the quality of the resulting cloth. The "depth" or "height" of the resulting projections is determined by a combination of the perforations size and the parameters of the water entanglement processing, as is known in the art.

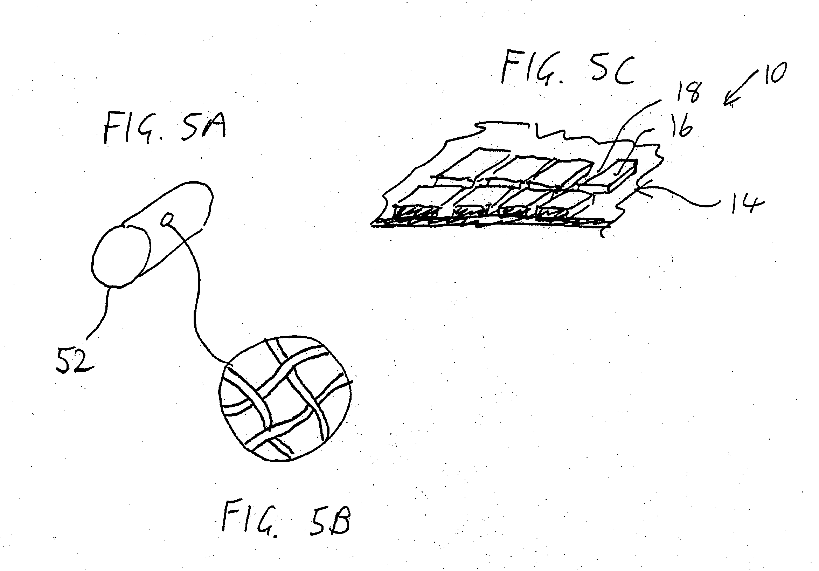

Turning now to Figures 5A and 5B, these show an alternative implementation of a cylinder **52** for use in cylinder subsystem **42** where cylinder **50** is formed with an open netting surface, thereby forming a pattern of isolated square or rectangular projecting features **16** surrounded by lowered regions **18** as shown in Figure 5C. The netting surface can be implemented either by a netting layer overlaying a perforated cylinder, or by a cylinder formed directly from netting-type material. "Netting" in this context refers to any repetitive pattern with substantially polygonal, typically triangular or rectangular, openings. The structure may be formed from a woven arrangement of strands or strips, such as metal strands, or as a smooth surface with appropriately shaped perforations, for example of polymer materials. Typically, a stainless steel mesh is used. The size and spacing of the openings typically varies in a manner similar to that of the cylinder **50** discussed above. According to one particularly preferred example of a square netting pattern, the strands and the spaces have equal widths, such that the total open area of the net (and corresponding raised areas of the product) correspond to about 25% of the total surface area.

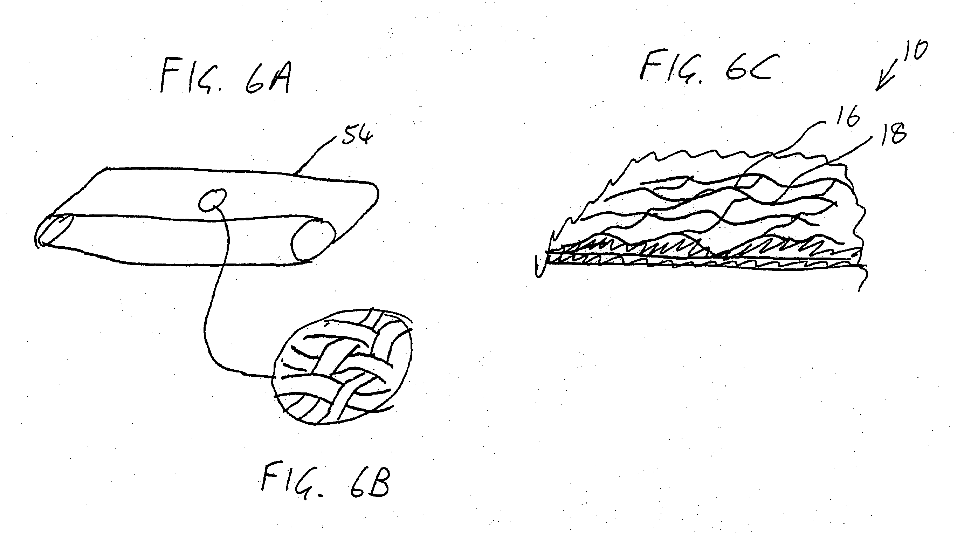

Figures 6A and 6B show a preferred implementation of a conveyor belt **54** for use in the conveyor belt subsystem **40** of Figure 3. In this case, the conveyor belt is textured in order to impart a corresponding pattern to the surface of the non-woven web by physical processes equivalent to those described above with reference to cylinder subsystem **42**. In the example shown here, the belt has a woven-fabric texture which imparts an undulating woven texture to the surface of the non-woven web as shown in Figure 6C. The resulting texture is less aggressive in its abrasivity than the isolated projections of the previous implementations, rendering the product suitable for a range of lower-abrasivity applications such as personal hygiene and skin-care products. It will be noted, however, that conveyor belts with other types may be used to form patterns with a range of different textures, resulting in final products with differing degrees of abrasivity.

In each case of the conveyor belt or cylinder subsystem, one or more arrangement of water jets is directed towards the surface of the conveyor belt or cylinder so as to force the fibers into close engagement with the corresponding features of the underlying surface.

Turning now briefly back to Figures 2A-2C, it should be noted that particularly preferred implementations of the present invention employ a multi-layer web **10** made up from two or more layers where at least a second layer **60**, and typically all layers other than layer **12**, contains primarily fibers which do not form nodules or otherwise undergo physical structural changes under the heat treatment conditions used. Most preferably, layer **60** is made up substantially exclusively of fibers which do not significantly change their physical structure under the heat treatment conditions used. In this case, layer **12** is disposed facing the roller or conveyor belt of subsystems **40** and **42**, while the additional layer or layers face the water jet nozzle **arrangements 34**. Layer **60** may be made up of any fiber or mix of fibers which is known for production of non-woven cloth, including various natural, synthetic and artificial fibers. Furthermore, it should be noted that layer **60** may include thermoplastic fibers with a transition temperature higher than that of the heat treatment conditions used for generating nodules in layer **12.** Most preferably, layer **60** is formed primarily from fibers which impart softness and/or absorbent properties to the adjacent surface **62** of the web. For optimal fine quality and high opacity, fine gauge fibers of d-tex no more than 4.5 (denier of 4), and most preferably no more than 2.2 (denier 2), are used.

It should be noted that there is a profound synergy between the multi-layer implementation of the present invention and patterning techniques such as those described herein which generate migration of fibers within the web to form the required pattern. In other words, water from the water jets used in the patterning techniques described above drains through the web and the underlying cylinder or conveyor belt, carrying with it fibers which become lodged in the openings to form projections. This results in a net migration of fibers from the adjacent web to the "raised regions". This stands in contrast to stamping techniques used in certain other production techniques which merely squash part of the structure generating varying fiber density without migration of fibers.

Thus, according to a preferred multi-layer implementation of the present invention, the patterning process is performed so as to cause migration of at least a proportion, and preferably a majority, of the thermoplastic fibers within the layer **12** from lowered regions **18** to raised regions **16**. This preferably results in a majority of the total material from layer **12** is located within raised regions **16** in the final product. This migration produces a structure such as in Figure 2B where the nodule-forming fibers are concentrated in the raised regions for maximum contribution to the abrasive properties of the cloth while the main underlying structural component of the cloth is provided by the fibers of layer **60** which remain soft, flexible and absorbent after the heat-treatment. The result is a dual-function product in which one side provides abrasive properties while the opposite side has a soft absorbent high-quality non-woven cloth finish, and wherein the entire product maintains a highly flexible feel.

Parenthetically, it should be noted that both the primary water-entanglement process and the patterning processes described herein cause a small degree of mixing of fibers between the layers. In practice, this mixing has been found to correspond to no more than a few percent of the overall composition of each layer, and therefore does not significantly impact the bulk properties of the various layers.

Returning now to Figure 3, as mentioned earlier, drying system **46** preferably performs both drying and heat treatment functions according to the teachings of the present invention. The operating temperature of the dryer is chosen to be near or above the transition temperature of the active polymer component of layer **12** and to maintain that temperature for slightly longer than is required to achieve drying of the web. The maximum temperature reached by the cloth after drying and the time period for which is it maintained at that temperature both affect the proportion of thermoplastic fibers which undergo changes in physical morphology and/or the extent of the changes which take place. By adjusting these parameters, as well as the depth of the embossing and the proportion of thermoplastic fibers in the layer, it is possible to achieve fine adjustment of both the level of abrasivity and the textural "feel" of the final product.

By way of a non-limiting example, the drying and heat treatment steps may be performed by an "air-through" dryer in which hot air is driven through the cloth as it passes over a cylinder or conveyor system. In this case, the dryer configuration is preferably arranged so that the embossed surface of layer **12** faces away from the cylinder or conveyor belt during this process in order to avoid mechanical contact with the embossed pattern during the heat treatment processing.

It should be noted that the present invention may be used to provide products for a wide range of different applications, ranging from very mildly abrasive products for personal hygiene or cosmetic applications up to cleaning pads for scouring household surfaces. In applications where a soft, absorbent texture is required, the proportion of thermoplastic fibers used in layer **12** is preferably below about 50%. For other applications where greater abrasion is required, proportions in excess of 50% may be preferred. In both cases, additional absorbency and a "soft" rear surface may be provided by additional layer(s) **60** if desired. In the case of a cleaning pad, this may provide a reversible scouring-and-wiping product.

Finally, it should also be noted that the functionality of the resulting product may optionally be enhanced by impregnation with various additives, finishing agents or cleaning agents, according to the intended use. Thus, a make-up removal pad may be impregnated with a make-up solvent and/or skin-conditioning agent, while a scouring pad may be impregnated with detergent or the like.

## Claims

1. A method for producing abrasive air-laid non-woven cloth, comprising:
(a) forming a non-woven web of fibers including at least a first layer adjacent to a first surface of the web containing at least 5% by weight of thermoplastic fibers, and at least a second layer adjacent to a second surface of the web; and
(b) feeding said web to
i. a water entanglement bonding system employing water jets to cause entanglement of fibers in the web;
ii. a patterning system so as to generate a pattern of raised regions and lowered regions in said first surface; and
iii. a drying system to perform heat treatment on said web sufficient to cause at least part of said thermoplastic fibers to undergo changes in physical morphology, thereby imparting abrasive properties to at least said raised regions of said first surface,
wherein said patterning is implemented so as to cause migration of a majority of fibers making up said first layer in said lowered regions to said raised regions,
wherein said second layer primarily contains fibers which do not undergo changes in physical morphology under said heat treatment.

2. The method of claim 1, wherein said patterning is implemented by use of water jets to displace fibers.

3. The method of claim 2, wherein said water jets of said patterning are directed towards a portion of said web passing over a cylinder with a perforated surface.

4. The method of claim 2, wherein said water jets of said patterning are directed towards a portion of said web passing over a cylinder with a netting surface.

5. The method of claim 2, wherein said water jets of said patterning are directed towards a portion of said web passing along a patterned conveyor belt.

6. The method of claim 1, wherein said patterning is implemented such that said raised regions include a plurality of isolated projecting features surrounded by said lowered regions.

7. The method of claim 1, wherein said patterning is implemented such that said raised regions include a plurality of elongated ridges.

8. The method of claim 1, wherein said thermoplastic fibers have a weight of no more than 4.5 grams per 10,000 meters.

9. The method of claim 1, wherein said thermoplastic fibers have a weight of no more than 2.2 grams per 10,000 meters.

10. The method of claim 1, wherein said first layer contains at least 10% by weight of said thermoplastic fibers.

11. The method of claim 1, wherein said first layer contains less than 50% by weight of said thermoplastic fibers.

12. The method of claim 1, wherein said first layer contains more than 50% by weight of said thermoplastic fibers.

13. An abrasive non-woven cloth produced according to the method of claim 1,
wherein the first layer contains at least 5% by weight of thermoplastic fibers heat treated so as to include a plurality of nodules,
wherein said plurality of nodules are substantially only in said first layer and a majority of material from said first layer is located within said raised regions for maximum contribution to abrasive properties of the cloth,
wherein fibers from first and second layers are entangled.

14. The cloth of claim 13, wherein said raised regions include a plurality of isolated projecting features surrounded by said lowered regions.

15. The cloth of claim 13, wherein said raised regions include a plurality of elongated ridges.

16. The cloth of claim 13, wherein said cloth is formed primarily from fibers having a weight of no more than 4.5 grams per 10,000 meters.

17. The cloth of claim 13, wherein said cloth is formed primarily from fibers having a weight of no more than 2.2 grams per 10,000 meters.

18. The cloth of claim 13, wherein said first layer contains at least 10% by weight of said thermoplastic fibers.

19. The cloth of claim 13, wherein said first layer contains less than 50% by weight of said thermoplastic fibers.

20. The cloth of claim 13, wherein said first layer contains more than 50% by weight of said thermoplastic fibers.

21. The cloth of claim 13, wherein said second layer is formed primarily from fibers which impart softness and/or absorbent properties to said second surface.

## Patentansprüche

1. Verfahren zur Herstellung eines abriebfesten, im Luftstrom aufgewirbelten Textilverbundstoffes, welches umfasst:
(a) Bilden eines Faser-Gewebestoffes, welcher mindestens eine ersten Schicht neben einer ersten Oberfläche des Gewebes, die mindestens 5 Gew.-% thermoplastische Fasern enthält, und mindestens eine zweiten Schicht neben einer zweiten Oberfläche des Gewebes enthält; und
(b) Führen des Gewebes zu
i. einem Wasser Verfilzungs-Verbindungs-System, bei dem Wasserstrahl eingesetzt wird, um eine Verfilzung der Fasern in dem Gewebe zu bewirken;
ii. ein Struktur-gebendes System, um eine Struktur mit erhöhten Bereichen und abgesenkten Bereichen in der ersten Oberfläche zu erzeugen, und
iii. ein Trocknungs-System, um eine Wärmetrocknung des Gewebes durchzuführen, die ausreichend ist, so dass mindestens ein Teil der thermoplastischen Fasern ihre morphologische Form ändert, wodurch mindestens den erhöhten Bereichen der ersten Oberfläche abriebfeste Eigenschaften verliehen werden,
wobei die Strukturgebung derart durchgeführt wird, dass der größte Teil der Fasern, die die abgesenkten Bereiche der ersten Schicht ausmachen, in die erhöhten Bereiche wandert,
wobei die zweite Schicht hauptsächlich Fasern enthält, die während der Wärmebehandlung keine Änderung ihrer Morphologie erfahren.

2. Verfahren nach Anspruch 1, wobei die Strukturgebung durch Verwendung von Wasserstrahl zur Versetzung der Fasern erfolgt.

3. Verfahren nach Anspruch 2, wobei der Strukturgebungs-Wasserstrahl auf einen Bereich des Gewebes gerichtet ist, der über einen Zylinders mit einer mit Löchern versehenen Oberfläche gelangt.

4. Verfahren nach Anspruch 1, wobei der Strukturgebungs-Wasserstrahl auf einen Bereich des Gewebes gerichtet ist, der über einen Zylinder mit einer Benetzungsoberfläche gelangt.

5. Verfahren nach Anspruch 1, wobei der Strukturgebungs-Wasserstrahl auf einen Bereich des Gewebes gerichtet ist, der über ein mit einer Struktur versehenes Band gelangt.

6. Verfahren nach Anspruch 1, wobei die Struktur derart ausgebildet wird, dass die erhöhten Bereiche mehrere isolierte vorstehende Charakteristika umfassen, die von den abgesenkten Bereichen umgeben sind.

7. Verfahren nach Anspruch 1, wobei die Struktur derart ausgebildet wird, dass die erhöhten Bereiche mehrere längliche Rippen umfassen.

8. Verfahren nach Anspruch 1, wobei die thermoplastischen Fasern ein Gewicht von nicht mehr als 4,5 g / 10.000 m aufweisen.

9. Verfahren nach Anspruch 1, wobei die thermoplastischen Fasern ein Gewicht von nicht mehr als 2,2 g / 10.000 m aufweisen.

10. Verfahren nach Anspruch 1, wobei die erste Schicht mindestens 10 Gew.-% thermoplastische Fasern enthält.

11. Verfahren nach Anspruch 1, wobei die erste Schicht weniger als 50 Gew.-% der thermoplastischen Fasern enthält.

12. Verfahren nach Anspruch 1, wobei die erste Schicht mehr als 50 Gew.-% der thermoplastischen Fasern enthält.

13. Abriebfester Textilverbundstoff, hergestellt durch ein Verfahren nach Anspruch 1,
worin die erste Schicht mindestens 5 Gew.-% wärmebehandelte, thermoplastische Fasern umfasst, um mehrere Knötchen aufzuweisen;
worin die mehreren Knötchen im Wesentlichen nur in der ersten Schicht vorhanden sind und der größte Teil des Materials aus der ersten Schicht in den erhöhten Bereichen vorhanden ist, um einen Maximum zu den Abriebeigenschaften des Gewebes beizutragen,
worin die Fasern der ersten und zweiten Schicht verwickelt sind.

14. Gewebe nach Anspruch 13, worin die erhöhten Bereiche mehrere isolierte vorstehende Charakteristika umfasst, die von den abgesenkten Bereichen umgeben sind.

15. Gewebe nach Anspruch 13, worin die erhöhten Bereiche mehrere längliche Rippen umfassen.

16. Gewebe nach Anspruch 13, worin das Gewebe hauptsächlich aus Fasern mit einem Gewicht von nicht mehr als 4,5 g / 10.000 m gebildet ist.

17. Gewebe nach Anspruch 13, worin das Gewebe hauptsächlich aus Fasern mit einem Gewicht von nicht mehr als 2,2 g / 10.000 m gebildet ist.

18. Gewebe nach Anspruch 13, worin die erste Schicht mindestens 10 Gew.-% der thermoplastischen Fasern enthält.

19. Gewebe nach Anspruch 13, worin die erste Schicht weniger als 50 Gew.-% der thermoplastischen Fasern enthält.

20. Gewebe nach Anspruch 13, worin die erste Schicht mehr als 50 Gew.-% der thermoplastischen Fasern enthält.

21. Gewebe nach Anspruch 13, worin die zweite Schicht hauptsächlich aus Fasern besteht, welche der zweiten Oberfläche Weichheit und/oder absorbierende Eigenschaften verleihen.

## Revendications

1. Procédé de production d'une étoffe non tissée abrasive formée par voie sèche, comprenant :
(a) la formation d'une bande non tissée de fibres comprenant au moins une première couche adjacente à une première surface de la bande contenant au moins 5 % en poids de fibres thermoplastiques, et au moins une seconde couche adjacente à une seconde surface de la bande ; et
(b) l'alimentation de ladite bande vers
i. un système de liaison par enchevêtrement à l'eau faisant appel à des jets d'eau pour provoquer l'enchevêtrement des fibres dans la bande ;
ii. un système de formation de motif de façon à produire un motif de régions relevées et de régions abaissées dans ladite première surface ; et
iii. un système de séchage pour exécuter sur ladite bande un traitement thermique suffisant pour faire en sorte qu'au moins une partie desdites fibres thermoplastiques subissent des changements de morphologie physique, en communiquant de ce fait des propriétés abrasives au moins auxdites régions relevées de ladite première surface,
dans lequel ladite formation de motif est mise en oeuvre de façon à provoquer une migration d'une majorité de fibres constituant ladite première couche dans lesdites régions abaissées vers lesdites régions relevées,
dans lequel ladite seconde couche contient principalement des fibres qui ne subissent pas de changements de morphologie physique sous l'effet dudit traitement thermique.

2. Procédé selon la revendication 1, dans lequel ladite formation de motif est mise en oeuvre en utilisant des jets d'eau pour déplacer les fibres.

3. Procédé selon la revendication 2, dans lequel lesdits jets d'eau de ladite formation de motif sont dirigés vers une partie de ladite bande passant au-dessus d'un cylindre avec une surface perforée.

4. Procédé selon la revendication 2, dans lequel lesdits jets d'eau de ladite formation de motif sont dirigés vers une partie de ladite bande passant au-dessus d'un cylindre avec une surface de filet.

5. Procédé selon la revendication 2, dans lequel lesdits jets d'eau de ladite formation de motif sont dirigés vers une partie de ladite bande passant le long d'une bande transporteuse à motifs.

6. Procédé selon la revendication 1, dans lequel ladite formation de motif est mise en oeuvre de telle sorte que lesdites régions relevées comprennent une pluralité d'éléments isolés faisant saillie entourés par lesdites régions abaissées.

7. Procédé selon la revendication 1, dans lequel ladite formation de motif est mise en oeuvre de telle sorte que lesdites régions relevées comprennent une pluralité de crêtes allongées.

8. Procédé selon la revendication 1, dans lequel lesdites fibres thermoplastiques ont un poids d'au plus 4,5 grammes pour 10 000 mètres.

9. Procédé selon la revendication 1, dans lequel lesdites fibres thermoplastiques ont un poids d'au plus 2,2 grammes pour 10 000 mètres.

10. Procédé selon la revendication 1, dans lequel ladite première couche contient au moins 10 % en poids desdites fibres thermoplastiques.

11. Procédé selon la revendication 1, dans lequel ladite première couche contient moins de 50 % en poids desdites fibres thermoplastiques.

12. Procédé selon la revendication 1, dans lequel ladite première couche contient plus de 50 % en poids desdites fibres thermoplastiques.

13. Étoffe non tissée abrasive produite selon le procédé selon la revendication 1, dans laquelle la première couche contient au moins 5 % en poids de fibres thermoplastiques traitées thermiquement de façon à inclure une pluralité de nodules,
dans laquelle ladite pluralité de nodules se trouve sensiblement uniquement dans ladite première couche et une majorité du matériau de ladite première couche est située au sein desdites régions relevées pour une contribution maximale aux propriétés abrasives de l'étoffe, dans laquelle les fibres des première et seconde couches sont enchevêtrées.

14. Étoffe selon la revendication 13, dans laquelle lesdites régions relevées comprennent une pluralité d'éléments isolés faisant saillie entourés par lesdites régions abaissées.

15. Étoffe selon la revendication 13, dans laquelle lesdites régions relevées comprennent une pluralité de crêtes allongées.

16. Étoffe selon la revendication 13, où ladite étoffe est formée principalement de fibres possédant un poids d'au plus 4,5 grammes pour 10 000 mètres.

17. Étoffe selon la revendication 13, où ladite étoffe est formée principalement de fibres possédant un poids d'au plus 2,2 grammes pour 10 000 mètres.

18. Étoffe selon la revendication 13, dans laquelle ladite première couche contient au moins 10 % en poids desdites fibres thermoplastiques.

19. Étoffe selon la revendication 13, dans laquelle ladite première couche contient moins de 50 % en poids desdites fibres thermoplastiques.

20. Étoffe selon la revendication 13, dans laquelle ladite première couche contient plus de 50 % en poids desdites fibres thermoplastiques.

21. Étoffe selon la revendication 13, dans laquelle ladite seconde couche est formée principalement à partir de fibres qui communiquent des propriétés de douceur et/ou absorbantes à ladite seconde surface.
